# EUROPÄISCHE PATENTANMELDUNG

(11) **EP 0 720 340 A2**
(43) Veröffentlichungstag der Anmeldung: **03.07.1996**
(21) Anmeldenummer: 95119490.1
(22) Anmeldetag: 11.12.1995
(51) Int. Cl.: H04M 1/66

(54) **Verfahren zur empfangsseitigen Auswahl von Fernmeldeverbindungen**

(30) Priorität: 30.12.1994 DE 4447241
(71) Anmelder: SIEMENS AKTIENGESELLSCHAFT, D-80333 München (DE)
(72) Erfinder: Arbenz, Dietrich, Dipl.-Ing., D-81479 München (DE)

(57) **Zusammenfassung**

Bei der Herstellung einer Verbindung werden zum angeforderten Endgerät (T2) spezielle Kennzeichnungsinformationen übermittelt, die das Endgerät (T1) bezeichnen, von dem der Verbindungswunsch ausgeht. Eine derartige Kennzeichnung besteht beispielsweise in der Übermittlung der Rufnummer dieses Endgerätes. Es können auch, gegebenenfalls zusätzlich, personenindividuelle Informationen (MFC-Zeichen) übertragen werden. Im empfangsseitigen Endgerät werden die kennzeichnenden Informationen mit dort abgespeicherten Referenzinformationen (SP1) verglichen. Diese Referenzinformationen bezeichnen die Berechtigung oder Nichtberechtigung zur Durchschaltung einer Fernmeldeverbindung. Es wird also dadurch ein selektives Durchschalten bzw. Abweisen von z.B. Fernsprechverbindungen ermöglicht. Bei einer Abweisung wird der Ruf unterdrückt und es erfolgt eine Umkopplung der Verbindung auf einen dem Endgerät zugeordneten Speicher (SP2), indem durch das sendeseitige Fernmeldeendgerät eine Nachricht einspeicherbar ist.

## Beschreibung

Gegenüber kommenden Verbindungswünschen haben insbesondere Hauptanschlußteilnehmer nur eingeschränkte Möglichkeiten, auf diese zu reagieren. Eine unerwünschte Störung durch Rufinformationen eines Endgerätes kann der Teilnehmer z.B. durch Ziehen des Telefonanschlußsteckers, vermeiden. Dies ist dann jedoch mit dem Nachteil verbunden, daß dadurch der Anschluß vollständig außer Funktion gesetzt ist, so daß keinerlei Verbindungen, also auch keine aus der Sicht des jeweiligen Teilnehmers gewünschten Verbindungen zu dem betreffenden Endgerät hergestellt werden können.

Eine weitere Möglichkeit, auf kommende Verbindungswünsche zu reagieren, besteht in der Verwendung eines Anrufbeantworters. Dabei ist es je nach Ausgestaltung des Anrufbeantworters möglich, den Anrufer an seiner Stimme zu identifizieren und gegebenenfalls durch Abheben des Telefonhörers die direkte Verbindung mit dem Anrufer herzustellen. Abgesehen davon, daß ein Teil der Anrufer bei der Zuschaltung eines Anrufbeantworters keine Nachricht hinterläßt - der Anrufer also mithin auch nicht an seiner Stimme identifizierbar ist - besteht ein weiterer Nachteil in der Verwendung von Anrufbeantwortern darin, daß das Endgerät in der Regel zunächst einige Rufsignale abgibt, bevor der Anrufbeantworter zugeschaltet wird. Dies kann, beispielsweise während der Nachstunden, störend wirken. Im übrigen setzt die direkte Verbindung zu dem Anrufenden nach seiner Identifizierung anhand der Stimme voraus, daß sich der Angerufene während der Aufnahme der Nachricht auf dem Antrufbeantworter in unmittelbarer Nähe des Anrufbeantworters und des Fernsprechendgerätes befindet.

Aus der DE-Patentschrift 32 34 093 C2 ist ein Verfahren zur empfangsseitigen Auswahl von über eine Vermittlungsstelle einer Fernmelde- bzw. Fernsprechanlage übermittelten Daten bekannt. Im Rahmen dieses bekannten Verfahrens überträgt das empfangsseitige Endgerät Auswahlinformationen an die Vermittlungsstelle, die nur diejenigen von einem sendeseitigen Endgerät angeforderten Verbindungen durchschaltet, die empfangsseitig gewünscht sind. Dabei werden entweder Auswahlinformationen über mindestens eine herstellbare Verbindung oder über mindestens eine nicht herstellbare Verbindung an die Vermittlungsstelle übermittelt. Rufende Endgeräte, die aufgrund der vom empfangsseitigen Endgerät vorab abgegebenen Auswahlinformationen die gewünschte Verbindung nicht herstellen können, werden hierüber von der Vermittlungsstelle informiert.

Die Erfindung bezieht sich nun gleichfalls auf ein Verfahren zur empfangsseitigen Auswahl von Fernmeldeverbindungen. Es erfolgt ein Zugriff auf abgespeicherte Referenzinformationen, deren Einspeicherung durch das empfangsseitige Fernmeldeendgerät veranlaßt wurde. Die Referenzinformationen bezeichnen das sendeseitige Fernmeldeendgerät und seine Berechtigung oder Nichtberechtigung zur Durchschaltung einer Fernmeldeverbindung zu dem empfangsseitigen Fernmeldeendgerät.

Der Erfindung liegt die Aufgabe zugrunde, ein Verfahren anzugeben, das Teilnehmern empfangsseitiger Fernmeldeendgeräte eine erweiterte Kontrolle kommender Verbindungen ermöglicht.

Die Lösung dieser Aufgabe erfolgt erfindungsgemäß mit den Merkmalen des Patentanspruches 1. Als erfindungswesentlich ist anzusehen, daß Teilnehmer empfangsseitiger Endgeräte die Durchschaltung kommender Verbindungen gezielt auswählen können. Ein anstehender Anruf wird erfindungsgemäß nach bestimmten unterschiedlichen Kriterien behandelt. Grundsätzlich wird die kommende Verbindung bis zum angeforderten Endgerät aufgebaut und es wird die mitgelieferte Information über die Identität des Anrufer mit anderen, an der gewünschten Teilnehmerstelle gespeicherten Teilnehmer-Identitäten verglichen. Das Vergleichsergebnis kann dann je nach Vorgabe des betreffenden gewünschten Teilnehmers dazu führen, daß entweder das Rufsignal abgegeben und mit dem Abheben des Handapparates die Verbindung endgültig durchgestellt wird oder daß für den aufgrund der abgespeicherten Auswahlinformationen vergeblich anfordernden Teilnehmer eine andere Form der Nachrichtenübermittlung selektiv freigegeben ist. Somit ist ein rufender Teilnehmer nicht, wie es bei dem genannten Stand der Technik der Fall ist, an der Übermittlung einer Nachricht gehindert. Außerdem erfolgt keine Belegung der Anschlußleitung während des Zeitbereiches, in dem die zur Auswahl herangezogenen Referenzinformationen durch den Teilnehmer eingegeben werden.

Mit der erfindungsgemäßen Lösung, die also den Aufbau der Verbindung bis zum empfangsseitigen Endgerät vorsieht, ergibt sich für den Teilnehmer dieses Endgerätes kein Nachteil insofern, als er eine möglicherweise für ihn wichtige Nachricht trotzdem zur Kenntnis nehmen kann. Eine solche Nachricht kann in den Fällen, in denen der Verbindungsversuch aufgrund des in der geschilderten Weise vorgenommenen Vergleiches abgewiesen wird, gemäß Anspruch 2 in einen Speicher hinterlegt werden. Dies kann beispielsweise dadurch erfolgen, daß, bezogen auf den bestimmten rufenden Teilnehmer, automatisch selektiv auf ein Sprachaufzeichnungsgerät umgeschaltet wird. Dies kann beispielsweise ein Anrufbeantworter sein. In einem solchen Fall wird dann beispielsweise die Abgabe eines Rufsignals unterdrückt. Gemäß einer Weiterbildung der Erfindung wird zur speziellen Kennzeichnung des sendeseitigen Fernmeldeendgerätes eine darauf unmittelbar bezogene Information übermittelt. Dies kann beispielsweise bei einem ISDN-Kommunikationssystem die in einem solchen Fall zum angeforderten Teilnehmerendgerät übermittelte Rufnummer sein. Anstelle dieser Rufnummer oder auch zusätzlich zu dieser Rufnummer kann eine personenindividuelle Information zu dem empfangsseitigen Fernmeldeendgerät übertragen werden. Diese personenindividuelle Information kann beispielsweise eine persönliche Identifikationsnummer darstellen, die z.B. mit Hilfe eines für sich bekannten Mehrfrequenzcode-Zeichensenders über das Mikrophon des Sprechkreises des sendeseitigen Endgerätes eingegeben wird. Diese Zeichen werden dann empfangsseitig durch einen hierfür empfangsseitig vorhandenen Empfänger aufgenommen und bewertet. Ist dem empfangsseitigen Endgerät ein Anrufbeantworter beigeordnet oder mit ihm integriert, so kann der ihm üblicherweise zugehörige MFC-Empfänger für diese Auswertung zusätzlich mitverwendet werden. Durch die Steuerung wird dann ein Vergleich der empfangenen Identifikationsnummer mit der als Referenzinformation abgespeicherten und die verabredete Identifikationsnummer repräsentierende Mehrfrequenzcode-Information vorgenommen.

Grundsätzlich könnte auch zur zusätzlichen Überprüfung der Berechtigung eine nach entsprechender Aufforderung abgegebene Sprachprobe durch eine empfangsseitig vorhandene Spracherkennungseinheit bewertet werden. Ergibt dann diese Bewertung eine Übereinstimmung zwischen der aktuell übermittelten Sprachprobe und der als Referenzinformation abgespeicherten Sprachprobe, so wird die Verbindung durchgestellt und das Rufsignal abgegeben.

Die Auswertung einer zusätzlichen vertraulichen Codeinformation, wie sie eine Sprachprobe oder die genannte Identifikationsnummer darstellt, kann beispielsweise nur für bestimmte Zeiträume vorgesehen sein.

Es kann erfindungsgemäß durch den Teilnehmer grundsätzlich die Identität von unwillkommenen oder von willkommenen rufenden Teilnehmern als Referenzinformationen eingespeichert werden. Abhängig von einem entsprechenden Programmierbefehl kann dies zu einem beliebigen Zeitpunkt oder auch während eines Gespräches für die bezüglich dieser Verbindung übermittelten Identität des rufenden Teilnehmers erfolgen. In der Regel wird sich die Einspeicherung der Referenzinformationen auf die Identität von willkommenen, d.h. berechtigten, Teilnehmern beziehen.

Weitere vorteilhafte Ausgestaltungen der Erfindung sind den restlichen Unteransprüchen zu entnehmen.

Die Erfindung wird nun anhand eines Ausführungsbeispiels gemäß Zeichnung beschrieben. Diese zeigt ein vereinfachtes Blockschaltbild eines zur Durchführung des erfindungsgemäßen Verfahrens ergänzten Fernsprechendgerätes.

Im Blockschaltbild des empfangsseitigen Fernsprechendgerätes T2 ist ein Mikroprozessorsystem MP1 vorhanden, das eine zentrale Einrichtung zur Steuerung der Teilnehmer-Bedienprozeduren, zur Steuerung aller im Endgerät zu erzeugenden akustischen Signale und zur Steuerung der Signalisierung mit der Vermittlungsanlage ÖV darstellt. Über einen aus Steuer-, Adreß- und Datenleitungen gebildeten lokalen Bus LB ist das Mikroprozessorsystem MP mit einem, z.B. in ROM-Speichertechnik realisierten Programmspeicher PS und mit einem Datenspeicher DS verbunden. Dieser Datenspeicher DS kann beispielsweise einen zum Teil in ROM-Speichertechnik ausgeführten Festspeicher - für Festdaten, Parameterdaten und Tabellen - und einen zum Teil in RAM-Speichertechnik ausgeführten Speicher zur Speicherung von benutzerindividuellen Daten enthalten. Hierzu könnten grundsätzlich auch die eingangs erwähnten Referenzinformationen gehören. Das Mikroprozessorsystem MP ist über einen Bus SB mit einem Bedienfeld-Mikroprozessorsystem BP und mit dem Tastenfeld TF1 des Fernsprechendgerätes T2 verbunden. Die Taste Tz dieses Tastenfeldes symbolisiert die übliche Wähltastatur und durch die Taste Tf soll das Vorhandensein von weiteren Funktionstasten angedeutet werden. Über diese Tasten werden diejenigen Signalisierungsinformationen erzeugt und weitergegeben, die jeweils bei ihrer Betätigung gebildet werden. Diese erzeugten codierten Informationen werden in dem Bedienfeld-Mikroprozessorsystem BP erkannt und zum Mikroprozessorsystem MP übertragen. Anschließend werden sie dort zu Signalisierungsinformationen und zu lokalen Bedienerführungsinformationen weiterverarbeitet, die vorzugsweise als optische Anzeigen auf entsprechenden Anzeigeeinrichtungen, z.B. ANZ1, dargestellt werden. Diese an den lokalen Bus LB angeschlossene Anzeigeeinrichtung ist beispielsweise durch ein LCD-Display (zwei Zeilen à 24 Zeichen) realisiert.

Das Fernsprechendgerät ist über eine Anschalteeinrichtung AE mit der Teilnehmeranschlußleitung Asl verbunden. Über diese Teilnehmeranschlußleitung kommuniziert das Fernsprechendgerät mit der zugehörigen Vermittlungsanlage, die eine zentrale Steuerung für die Durchführung der eigentlichen Vermittlungsvorgänge aufweist. Die Vermittlungsanlage ist entweder eine öffentliche Vermittlungsanlage ÖV, sie kann aber auch eine private Vermittlungsanlage sein.

Über die Teilnehmeranschlußleitung Asl werden die Nutzinformationen z.B. in zwei Nutzinformationskanälen B1, B2 und Signalisierungsinformationen in einem Signalisierungsinformationskanal D bidirektional übermittelt. Dies erfolgt im Rahmen der für die Kommunikationsendgeräte-, Kommunikationsanlagen-Signalisierung eingesetzten Protokollschichten.

Vermittels der Anschalteeinrichtung AE wird eine Mehrzahl von wesentlichen Funktionen erfüllt. Hierzu gehört beispielsweise die übertragungstechnische Anpassung an die Teilnehmeranschlußleitung Asl, das Übermitteln der Signalisierungs- und Nutzinformationen in einem bestimmten Übertragungsverfahren, das Trennen von Nutz- und Signalisierungsinformationen sowie das Weiterleiten an die entsprechenden Einrichtungen. Außerdem werden durch diese Anschalteeinrichtung AE Aufgaben, die im Zusammenhang mit der empfangsseitigen Auswahl von Kommunikationsverbindungen, z.B. Fernsprechverbindungen, anfallen, erfüllt. Vermittels dieser Anschalteeinrichtung erfolgt auch das Auskoppeln einer über die Anschlußleitung Asl übertragenen und von der Vermittlungsanlage ÖV bereitgestellten elektrischen Energie und deren Weiterführung an eine fernsprechendgeräteinterne Stromversorgung SV. In der Stromversorgung SV wird die von der Anschlußeinrichtung AE übermittelte elektrische Energie in eine für den Betrieb des Fernsprechendgerätes erforderliche positive und negative Speisespannung umgesetzt. Vorzugsweise ist diese Stromversorgung SV durch eine platzsparende Schaltregler-Stromversorgung realisiert. Die in der Anschlußeinrichtung AE von den über die Anschlußleitung Asl übermittelten Informationen abgetrennten Signalisierungsinformationen werden nach ihrer entsprechenden Aufbereitung über den lokalen Bus LB an das Mikroprozessorsystem MP übermittelt. In diesem System werden sie weiterverarbeitet und die entsprechenden Reaktionen, wie z.B. das Ansteuern von Ausgabeeinheiten, eingeleitet.

Die in der Anschlußeinrichtung AE abgetrennten Nutzinformationen gelangen über einen Bus BK an eine Analog-/Digital-Umsetzeinrichtung A/D. In dieser werden aus den von der Anschlußeinrichtung AE abgegebenen digitalisierten Nutzinformationssignalen, die Sprachsignale darstellen, analoge Sprachsignale gebildet. Die an einem weiteren Eingang E2 der Analog-/Digital-Umsetzeinrichtung A/D ankommenden analogen Sprachsignale werden in digitale Sprachsignale umgesetzt.

Die Codierung bzw. Decodierung der analogen bzw. digitalen Sprachsignale erfolgt z.B. durch das bekannte, standardisierte PCM-Verfahren. Die analogen Sprachsignale gelangen gemäß Ausführungsbeispiel zu dem Eingang E1 einer Akustikeinrichtung AKE. Diese setzt sich aus einem Akustikkoppler AK und einer Ansteuereinrichtung ASE zusammen.

Durch den Akustikkoppler AK werden die von der Umsetzeinrichtung A/D ankommenden analogen Signale an einen Ausgang A1 vermittelt. Dieser Ausgang A1 ist z.B. über einen Vorverstärker VV mit dem Sprechkreis des Fernsprechendgerätes verbunden. Die analogen Sprachsignale werden nach dem tatsächlichen Durchschalten der Sprechverbindung über den Vorverstärker VV an eine im Handapparat HA angeordnete Hörmuschel H geführt. Analog hierzu gelangen die von der im Handapparat HA angeordneten Sprechkapsel M abgegebenen Sprachsignale über den Vorverstärker VV an den Eingang E2 des Akustikkopplers AK.

Die analogen Sprachsignale werden durch den Akustikkoppler AK an einen mit der Analog-/Digital-Umsetzeinrichtung A/D verbundenen Ausgang A2 vermittelt. Diese analogen Sprachsignale werden in der genannten Umsetzeinrichtung A/D in digitale Signale umgesetzt und in der Anschlußeinrichtung AE in den zur Anschlußleitung Asl übermittelten Nutzinformationsstrom eingefügt. Die in der Akustikeinrichtung AKE angeordnete Ansteuereinrichtung ASE ist sowohl mit dem Akustikkoppler AK als auch mit dem lokalen Bus LB verbunden. In dieser Ansteuereinrichtung ASE werden die vom Mikroprozessorsystem MP über den lokalen Bus LB übermittelten Steuerbefehle in Informationen umgesetzt, durch die die Verbindungswege im Akustikkoppler AK eingestellt werden. Zusätzlich steuert die Ansteuereinrichtung ASE einen Ruftongenerator RT, der je nach Ansteuerung z.B. unterschiedliche Ruftöne mit entsprechenden Rufrhythmen liefert. Diese Ruftöne werden über den Akustikkoppler AK mit Hilfe der Ansteuereinrichtung ASE an den Handapparat HA und/oder an einen nicht dargestellten Lautsprecher vermittelt.

Im Ausführungsbeispiel sind die im Zusammenhang mit der empfangsseitigen Auswahl von Fernmeldeverbindungen stehenden Funktionseinheiten in der eigenständigen Einheit PU (Preprocessing Unit) zusammengefaßt. Ihre Anbindung an das Fernsprechendgerät T2 erfolgt über die Schnittstellen SF1 bzw. SF2. Bei entsprechender Ausgestaltung der Schnittstelle SF2 könnte auch anstelle der Anbindung an die Anschlußeinrichtung AE eine unmittelbare Anbindung an die Anschlußleitung Asl vorgenommen werden. Bei der Bildung einer eigenständigen Einheit PU kann ein handelsübliches Fernsprechendgerät ohne zumindest hardwaremäßige Änderungen verwendet werden. Die Funktionseinheiten der z.B. als Beistellgerät konzipierten Einheit PU stehen unter dem Steuereinfluß der durch den Prozessor MP2 realisierten Steuereinheit. Der Prozessor MP2 ist mit dem Mikroprozessor MP1 des Fernsprechendgerätes gekoppelt.

Die Referenzinformationen zur Auswahl der tatsächlich durchzuschaltenden Fernsprechverbindungen werden - soweit sie Rufnummerninformationen betreffen - durch den Teilnehmer mit Hilfe der Tasten des Tastenfeldes TF eingegeben. Referenzinformationen, die vertrauliche Identifikationsnummern betreffen, werden - soweit sie z.B. durch MFC-Zeichen charakterisiert sind - in geeigneter Weise eingegeben. Im Falle von MFC-Zeichen erfolgt ihre Auswertung und ihre Umsetzung in die dieses Zeichen repräsentierende und zur Einspeicherung in den Referenzspeicher geeigneten Informationen durch eine entsprechende, nicht dargestellte, Einheit. Ist ein Anrufbeantworter AB in dem Fernsprechendgerät T2 integriert, so kann dessen Empfangseinheit für derartige MFC-Zeichen, die zum Zwecke einer Ferneinstellung bzw. Fernabfrage üblicherweise verwendet werden, mit herangezogen werden. Vor einer Eingabe der Referenzinformationen ist eine diesbezügliche Information durch die Betätigung der jeweils zugeordneten Programmiertaste BT1 bzw. BT2 dem Prozessor MP2 zu übermitteln. Die Taste BT1 steht beispielsweise für die Eingabe von Rufnummern und die Taste BT2 für die Eingabe von Mehrfrequenzcode-Zeichen. Diese genannten Programmiertasten sind in gleicher Weise wie weitere Bedientasten BT3...BTx Teil des Tastenfeldes TF2 der Einheit PU. Die Referenzinformationen, die z.B. listenmäßig in dem Referenzspeicher SP1 abgelegt werden, können jederzeit ergänzt, geändert oder gelöscht werden. Durch diese abgespeicherten Referenzinformationen besteht also für einen Teilnehmer die Möglichkeit, z.B. seinen Fernsprechapparat oder gegebenenfalls auch sein Datenendgerät für bestimmte sendeseitige Endgeräte zu öffnen oder zu sperren. Es können demnach die eingespeicherten Referenzinformationen durch eine zusätzliche Kennzeichnung in der Weise deklariert werden, daß sie entweder abzuweisende oder erwünschte ankommende Verbindungen betreffen. In der Regel wird es sinnvoll sein, Referenzinformationen abzuspeichern, die Endgeräte für erwünschte Verbindungen bezeichnen.

Stellt die Vermittlungsstelle ÖV eine sogenannte ISDN-Vermittlungsstelle dar, so wird grundsätzlich die Rufnummer des rufenden Endgerätes zu dem angeforderten Endgerät, z.B. dem Fernsprechendgerät T2, über die Anschlußleitung Asl übertragen. Diese übermittelte Rufnummer wird dann üblicherweise z.B. auf der Anzeigeeinrichtung ANZ1 des betreffenden Fernsprechendgerätes angezeigt. Im Zusammenhang mit der empfangsseitigen Auswahl von Fernsprechverbindungen wird nun diese Rufnummer zunächst daraufhin geprüft, ob sie als entsprechende Referenzinformation in der Liste derjenigen Rufnummern enthalten ist, die z.B. ein erwünschtes rufendes Endgerät bezeichnen. Zu diesem Zweck wird die Rufnummer des Ursprungsendgerätes unter Einbeziehung des Prozessors MP2 einer Vergleichseinheit Vg zugeführt. Zur Überprüfung auf Übereinstimmung mit den in der Speichereinheit SP1 abgespeicherten Referenzinformationen werden diese, gesteuert durch den Prozessor MP2, ebenfalls der Vergleichseinheit Vg übermittelt. Ermöglicht die in diesem Referenzspeicher eingespeicherte Auswahlinformation die tatsächliche Durchschaltung der Verbindung, so wird die zunächst zurückgestellte Abgabe einer Rufinformation veranlaßt. Dies erfolgt z.B. abhängig von den über die Anschlußleitung ASl von der Vermittlungsstelle ÖV erhaltenen Rufsignalen durch die Einheit RT. Ihre Signale werden über den Eingang E3 dem Akustikkoppler AK zugeführt.

Die Abgabe eines Rufsignals wird solange unterdrückt, bis das Ergebnis dieser Vergleichsprüfung vorliegt. Ein im Sinne eines erwünschten Anrufes positives Ergebnis führt dann in Verbindung mit der Abgabe eines Rufsignals zur tatsächlichen Durchschaltung. Wird durch die Vergleichsprüfung festgestellt, daß es sich bei der aktuellen Anforderung um einen unwillkommenen Anruf handelt, so wird dem vergeblich rufenden Teilnehmer trotzdem die Möglichkeit für die Hinterlassung einer Nachricht gegeben. Dies kann beispielsweise in der Weise erfolgen, daß ein Sprachaufzeichnungsgerät, beispielsweise in Form des Speichers SP2, wirksam an die Leitung angeschaltet wird. Dies erfolgt, gesteuert durch den Mikroprozessor, z.B. über die Schnittstelle SF2 und je nach Ausgestaltung dieser Schnittstelle gegebenenfalls über die Anschlußeinrichtung AE. Ist ein Anrufbeantworter vorhanden, so kann dieser anstelle der Sprachspeichereinrichtung SP2 herangezogen werden. Im Zusammenhang mit der Anschaltung der Sprachspeichereinrichtung SP2 kann eine auf diese Tatsache hinweisende Information zu dem Ursprungsendgerät, z.B. dem Endgerät T1, übertragen werden. Zu diesem Zweck könnte über die bis zum Endgerät T2 bereits aufgebaute Verbindung ein in einem Sprachspeicherbaustein SSB eingespeicherter vorgegebener Text übermittelt werden. Solche handelsüblichen Bausteine speichern die eingegebene Sprachinformation digital und sie beinhalten gleichzeitig als eine Teileinheit die Analog-/Digital- bzw. Digital-/Analog-Wandlung. Wird also die gewünschte Verbindung abgewiesen, so wird selektiv die Ausgabe des im Sprachspeicherbaustein SSB gespeicherten Textes veranlaßt. In einem solchen Baustein können auch noch andere aktuell eingegebene Ansagen enthalten sein, die einem vergeblich rufenden Endgerät übermittelbar sind.

Diese bei abgewiesenen Anrufen vorgenommene selektive Anschaltung des Anrufbeantworters AB oder der Sprachspeichereinrichtung SP2 kann beispielsweise vorab durch die Betätigung der Bedientaste BT3 festgelegt werden. Soll, wie bereits geschildert, im Zusammenhang mit der Abweisung einer kommenden Verbindung eine Textansage erfolgen, so könnte dies durch Betätigung der Taste BT4 vorprogrammiert werden. Eine solche Textansage könnte z.B. Angaben über den Grund der Nichterreichbarkeit und Angaben üder die Zeit zu der der Teilnehmer erreichbar ist, enthalten.

Es ist erfindungsgemäß die Möglichkeit einer Nachrichtenaufzeichnung für den Fall gegeben, daß eine kommende Verbindung nicht zur Abgabe eines Rufsignals führt. Die eine Abgabe desRufsignals ermöglichende vollständige Durchschaltung kann auch von dem Ergebnis einer zusätzlichen Vergleichsprüfung abhängig gemacht werden. Diese nachfolgende zweite Identifizierung kann beispielsweise dadurch erfolgen, daß empfangsseitig überprüft wird, ob eine beispielsweise als MFC-Zeichenfolge sendeseitig eingegebene Identifikationsnummer mit einer abgespeicherten und dieser Nummer entsprechenden Referenzinformation übereinstimmt. Erst bei einem positiven Vergleichsergebnis werden die Rufsignale wirksam weitergegeben und es kann die Verbindung mit dem Abheben des Handapparates angenommen werden. In den Fällen, in denen nicht das ISDN-Leistungsmerkmal der Übermittlung der Rufnummer des Ursprungsendgerätes zur Verfügung steht, könnte also auch alternativ die Auswertung einer vom rufenden Teilnehmer eingegebenen Identifikationsnummer für die selektive Abweisung oder Annahme einer gewünschten Verbindung herangezogen werden.

Als Variante für die empfangsseitige Auswahl einer ankommenden Verbindung kann vorgesehen sein, daß zu vorbestimmten Zeiträumen anstehende Anrufe nur dann zur Abgabe eines Rufsignals führen, wenn der Anrufer während der Zeit der Anrufbeantworter- oder Textansage einen bestimmten vertraulichen Code eingibt. Diese gegebenenfalls mehrstellige Codeinformation könnte dann beispielsweise in Form von Mehrfrequenzcode-Zeichen vom betreffenden rufenden Endgerät aus übermittelt werden. Diese verabredeten Codeinformationen stehen dann als Referenzinformationen in der geschilderten Weise empfangsseitig zur Verfügung. Für bestimmte Gruppen von Teilnehmern könnten unterschiedliche Codeinformationen festgelegt werden. Es kann damit jeweils ein bestimmter engerer oder weiterer Kreis von Teilnehmern definiert werden. Diese einzelnen Berechtigungsgruppen können beispielsweise jeweils einer der Tasten BT6...BTx zugeordnet sein. Mit der Betätigung einer dieser Tasten wird damit der Steuerung die Information übermittelt, daß nur Anrufe von Teilnehmern, die dieser jeweiligen Gruppe zugehörig sind, als erwünschte Anrufe endgültig durchgeschaltet werden sollen. Die einer solchen Gruppe jeweils zugehörigen Teilnehmer sind entsprechend im Referenzspeicher SP1 abgespeichert. Aufgrund der empfangenen Codeinformationen kann die betreffende Teilnehmergruppe ihrer Art nach an der Anzeigeeinrichtung ANZ2 der Einheit PU angezeigt werden.

Durch die Eingabe einer vertraulichen Identifikationsnummer - die beispielsweise als MFC-Zeichenfolge mit einem handelsüblichen sog. "Info-Tip" eingebbar ist - könnte also auch bewirkt werden, daß Verbindungsversuche zum Erfolg führen, die von anderen als den in der Referenzliste des Speicher SP1 z.B. als "erwünscht" gekennzeichnetes Endgeräten ausgehen. Das bedeutet, daß z.B. dringende Gespräche auch von einer öffentlichen Telefonzelle aus geführt werden könnten. Die Auswertung der MFC-Zeichen kann z.B. durch die einem vorhandenen Anrufbeantworter zugeordneten diesbezüglichen Eingangseinheit vorgenommen werden.

Durch die Betätigung einer weiteren Taste BT5 kann der Steuerung die Information übermittelt werden, daß im Bedarfsfalle alle ankommenden Anrufe, soweit kein Besetztzustand vorliegt, zur Abgabe eines Rufsignals führen sollen.

Die Tasten des Tastenfeldes TF2 der Einheit PU können in bekannter Weise eine Leuchtanzeige (LED) enthalten, die durch ihren Leuchtzustand die jeweilige Aktivierung der betreffenden Bedientaste BT ...anzeigt.

Es ist auch denkbar, die für eine empfangsseitige Auswahl von Verbindungen herangezogene Einheit PU, die im Ausführungsbeispiel als eigenständige Einheit dargestellt ist, in das Fernsprechendgerät T2 zu integrieren. In einem solchen Fall würden dann einige der Funktionseinheiten der Einheit PU entfallen und deren Aufgaben von Einheiten übernommen werden, die im Fernsprechendgerät vorhanden sind. So könnte beispielsweise das Prozessorsystem MP zusätzliche die vom Prozessor MP2 gesteuerten Abläufe übernehmen, so daß letzterer entfallen könnte. Sämtliche Anzeigen erfolgen auf der Anzeige ANZ1 des Fernsprechendgerätes. Es könnte der Speicher DS-RAM unter der Voraussetzung eines entsprechenden Speichervolumens die einzugebenden Referenzinformationen aufnehmen. Das Tastenfeld TF1 wird bei der Integration der Einheit PU in das Fernsprechendgerät T2 durch das Tastenfeld TF2 ergänzt.

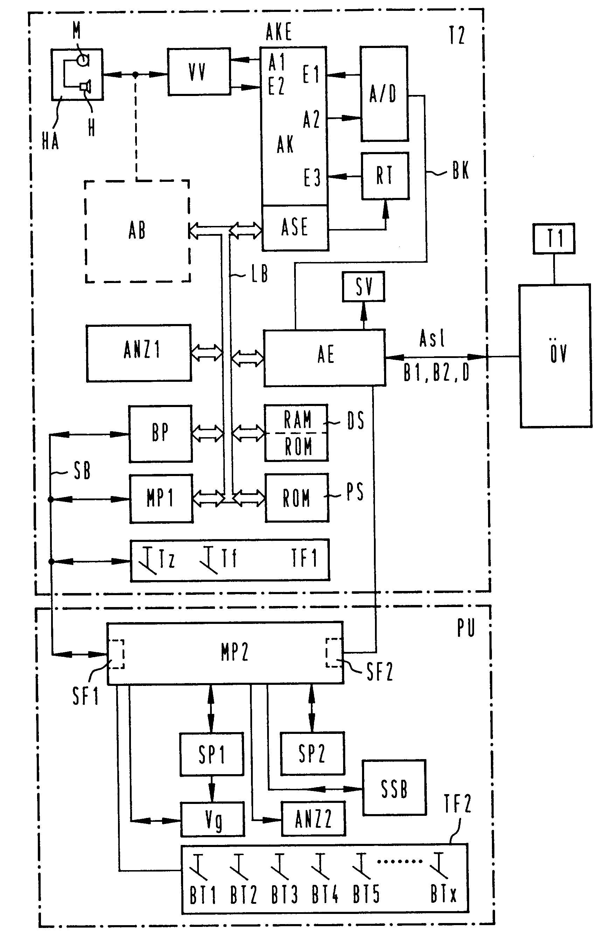

## Patentansprüche

1. Verfahren zur empfangsseitigen Auswahl von Fernmeldeverbindungen, wobei ein Zugriff auf abgespeicherte Referenzinformationen erfolgt, deren Einspeicherung durch das empfangsseitige Fernmeldeendgerät (T2) veranlaßt wurde und die Referenzinformationen das sendeseitige Fernmeldeendgerät (T1) und seine Berechtigung oder Nichtberechtigung zur Durchschaltung einer Fernmeldeverbindung zu dem empfangsseitigen Fernmeldeendgerät (T2) bezeichnen,
**dadurch gekennzeichnet,**
daß die Speichereinheit (SP1) für die Referenzinformationen dem empfangsseitigen Endgerät zugeordnet ist und daß diese Referenzinformationen durch eine dem empfangsseitigen Endgerät zugeordnete Steuerung (MP1, MP2) auf Übereinstimmung mit Informationen überprüft werden, die dem empfangsseitigen Fernmeldeendgerät jeweils bei der Herstellung einer Fernmeldeverbindung als spezielle Kennzeichnung des sendeseitigen (T1) Fernmeldeendgerätes zugeführt werden und daß die tatsächliche Herstellbarkeit der Verbindung in der ursprünglich gewünschten Art vom Prüfungsergebnis abhängig gemacht wird.

2. Verfahren nach Anspruch 1,
**dadurch gekennzeichnet,**
daß die Steuerung (MP1, MP2) in den Fällen, bei denen in Abhängigkeit der Überprüfung der speziellen Kennzeichnung das gerade einen Verbindungsversuch unternehmende sendeseitige Fernmeldeendgerät (T1) als nicht berechtigt zur Durchschaltung der Verbindung erkannt wird, die Verbindung auf einen Speicher (SP2) umkoppelt, die Fernmeldeverbindung endgültig herstellt und die Einspeicherung von Nachrichten des sendeseitigen Fernmeldeendgerätes (T1) in einen Speicher (SP2) selektiv freigibt.

3. Verfahren nach Anspruch 1 oder 2,
**dadurch gekennzeichnet,**
daß zur speziellen Kennzeichnung des sendeseitigen Fernmeldeendgerätes darauf unmittelbar bezogene Informationen und/oder personenindividuelle Informationen zu dem empfangsseitigen Fernmeldeendgerät übertragen werden.

4. Verfahren nach Anspruch 3,
**dadurch gekennzeichnet,**
daß die zum empfangsseitigen Fernmeldeendgerät (T2) mittels eines zur Herstellung einer Verbindung berechtigten Fernmeldeendgerätes übertragenen Informationen als Referenzinformationen in die Speichereinheit (SP1) des empfangsseitigen Fernmeldeendgerätes (T2) vorab eingespeichert werden.

5. Verfahren nach einem der Ansprüche 1 bis 4,
**dadurch gekennzeichnet,**
daß Informationen, die dem empfangsseitigen Fernmeldeendgerät (T2) als auf das sendeseitige Fernmeldeendgerät (T1) bezogene Informationen zugeführt werden, abhängig von einem in das empfangsseitige Fernmeldeendgerät (T2) eingegebenen Befehl als Referenzinformationen abgespeichert werden.

6. Verfahren nach einem der voranstehenden Ansprüche,
**dadurch gekennzeichnet,**
daß die Steuerung (MP1) jeweils eine das Ergebnis der Überprüfung bezeichnende Information auf einer optischen Anzeigeeinrichtung (ANZ1 bzw. ANZ2) anzeigt.

7. Anordnung zur Durchführung des Verfahrens nach einem der voranstehenden Ansprüche,
**dadurch gekennzeichnet,**
daß sie aus einem Fernmeldeendgerät (T2) mit einer Steuerung (MP1-MP2) besteht, der ein das Verfahren definierendes Programm (PS) zugeordnet ist, daß die Anordnung einen ersten Speicher (SP1) zur Aufnahme der Referenzinformationen und einen zweiten Speicher (SP2) zur Aufnahme von Nachrichten sendeseitiger Fernmeldeendgeräte (T1) aufweist.

8. Anordnung nach Anspruch 7,
**dadurch gekennzeichnet,**
daß zumindest ein bestimmter Teil der insgesamt vorhandenen Einheiten als mit dem Fernmeldeendgerät (T2) verbindbare eigenständige Einheit (PU) zusammengefaßt ist und daß diese Einheit jeweils eine Schnittstelle (IF1, IF2) zu dem empfangsseitigen Fernmeldeendgerät (T2) und zu der mit der zur zugeordneten Vermittlungsstelle (ÖV) führenden Anschlußleitung bzw. zu der mit ihr verbundenen Einheit (AE) aufweist.

9. Anordnung nach Anspruch 8,
**dadurch gekennzeichnet,**
daß die eigenständige Einheit (PU) eine optische Anzeigeeinrichtung (ANZ2) zur Darstellung der die Uberprüfungsergebnisse bezeichnenden Informationen aufweist.

10. Anordnung nach Anspruch 7 und 8,
**dadurch gekennzeichnet,**
daß sie Bedienelemente (BT1...BTx) zur Eingabe referenzinformationsbezogener Befehle aufweist.
